# EUROPEAN PATENT APPLICATION

(11) **EP 4 546 211 A1**
(43) Date of publication of application: **30.04.2025**
(21) Application number: 23899842.1
(22) Date of filing: 28.11.2023
(51) Int. Cl.: G06F 40/58

(54) **TEXT TRANSLATION METHOD AND APPARATUS, ELECTRONIC DEVICE AND MEDIUM**

(30) Priority: 06.12.2022 CN 202211579252
(71) Applicant: BEIJING YOUZHUJU NETWORK TECHNOLOGY CO. LTD., Beijing 101299 (CN); Lemon Inc., Grand Cayman, KY1-1205 (KY)
(72) Inventor: LIN, Zehui, Beijing 100028 (CN); SONG, Demin, Beijing 100028 (CN); CHENG, Shanbo, Songapore 018960 (SG); WANG, Mingxuan, Beijing 100028 (CN)
(74) Representative: Isarpatent
(86) International application number: PCT/CN2023/134853
(87) International publication number: WO 2024/120263

(57) **Abstract**

Embodiments of the present disclosure relate to a method, an apparatus, an electronic device, and a medium for text translation. The method includes determining a keyword set associated with a chapter-level monolingual corpus in a target language, where the keyword set includes a plurality of entity words and a plurality of pronouns, and masking the chapter-level monolingual corpus based on the keyword set. The method further includes generating a chapter-level text translation model based on the masked chapter-level monolingual corpus. According to the embodiments of the present disclosure, it is possible to enable translations of the same or associated words to have contextual consistency throughout a text, and to explicit a noun indicated by a pronoun, and further to supplement a missing pronoun, thereby improving accuracy of the text translation model.

## Description

### CROSS-REFERENCE TO RELATED APPLICATION(S)

This application claims priority to Chinese Patent Application No. 202211579252.5, filed on December 6, 2022 and entitled "METHOD, APPARATUS, ELECTRONIC DEVICE AND MEDIUM FOR TEXT TRANSLATION", the disclosure of which is incorporated herein by reference in its entirety.

### FIELD

Embodiments of the present disclosure relate to the field of computer and, in particular, to a method and apparatus for text translation, an electronic device, and a medium.

### BACKGROUND

Machine translation is a technique for translating a text from one language to another using a machine learning model or a deep learning model. In recent years, machine translation has achieved good results, and good translation accuracy can be achieved in the fields and languages with large-scale training data.

When translating a chapter, a traditional processing method is to translate the chapter by dividing the chapter into individual sentences. Therefore, the same words may result in different translations in different sentences. Particularly in application scenarios such as document translation, novel translation, and video translation, to accurately translate the original text information, contextual semantic relationships are often considered.

### SUMMARY

Embodiments of the present disclosure provide a method and apparatus for text translation, an electronic device, and a computer-readable storage medium.

According to a first aspect of the present disclosure, there is provided a method for text translation. The method includes determining a keyword set associated with a chapter-level monolingual corpus in a target language, where the keyword set includes a plurality of entity words and a plurality of pronouns. The method further includes masking the chapter-level monolingual corpus based on the keyword set. The method further includes generating a chapter-level text translation model based on the masked chapter-level monolingual corpus.

In a second aspect of the present disclosure, there is provided an apparatus for text translation. The apparatus includes a keyword set determination module configured to determine a keyword set associated with a chapter-level monolingual corpus in a target language, the keyword set including a plurality of entity words and a plurality of pronouns. The apparatus further includes a masking module configured to mask the chapter-level monolingual corpus based on the keyword set. The apparatus further includes a translation model generation module configured to generate a chapter-level text translation model based on the masked chapter-level monolingual corpus.

According to a third aspect of the present disclosure, there is provided an electronic device. The electronic device includes a processor and a memory coupled to the processor, the memory having instructions stored thereon, the instructions, when executed by the processor, causing the electronic device to perform the method according to the first aspect.

In a fourth aspect of the present disclosure, there is provided a computer-readable storage medium having one or more computer instructions stored thereon, where the one or more computer instructions are executed by a processor to implement the method according to the first aspect.

This Summary is provided to introduce a selection of concepts in a simplified form that are described in detail in the following Detailed Description section. This Summary is not intended to identify key features or essential features of the subject matter described herein, nor is it intended to limit the scope of the subject matter described herein.

### BRIEF DESCRIPTION OF THE DRAWINGS

The above and other features, advantages, and aspects of various embodiments of the present disclosure will become more apparent when taken in conjunction with the drawings and with reference to the following detailed description. The same or similar reference numbers in the drawings refer to the same or similar elements, where:
FIG. 1 illustrates a schematic diagram of an example environment in which a method for text translation can be implemented according to some embodiments of the present disclosure;
FIG. 2A illustrates a schematic diagram of translation without contextual consistency according to some embodiments of the present disclosure;
FIG. 2B illustrates a schematic diagram of translation with contextual consistency according to some embodiments of the present disclosure;
FIG. 2C illustrates a schematic diagram of pronoun supplementation according to some embodiments of the present disclosure;
FIG. 2D illustrates a schematic diagram of pronoun explicit according to some embodiments of the present disclosure;
FIG. 3 illustrates a flowchart of a method for text translation according to some embodiments of the present disclosure;
FIG. 4A illustrates a schematic diagram of a process of determining a keyword set according to some embodiments of the present disclosure;
FIG. 4B illustrates a schematic diagram of a process of determining a subset of a keyword set and masking according to some embodiments of the present disclosure;
FIG. 4C illustrates a schematic diagram of a process of determining another subset of a keyword set and masking according to some embodiments of the present disclosure;
FIG. 5 illustrates a schematic diagram of a process of training a text translation model according to some embodiments of the present disclosure;
FIG. 6 illustrates a schematic diagram of an example architecture of a text translation model according to some embodiments of the present disclosure;
FIG. 7 illustrates a schematic diagram of a process of predicting a masked word according to some embodiments of the present disclosure;
FIG. 8 illustrates a schematic diagram of a training effect with a monolingual corpus according to some embodiments of the present disclosure;
FIG. 9 illustrates a block diagram of an apparatus for text translation according to some embodiments of the present disclosure; and
FIG. 10 illustrates a block diagram of an electronic device according to some embodiments of the present disclosure.

Throughout the drawings, the same or similar reference numbers refer to the same or similar elements.

### DETAILED DESCRIPTION OF EMBODIMENTS

It can be understood that before using the technical solutions disclosed in the embodiments of the present disclosure, the user should be informed of the type, scope of use, use scenarios, etc. of the personal information involved in the present disclosure (such as a text in a language) in an appropriate manner in accordance with relevant laws and regulations, and the user's authorization should be obtained.

For example, in response to receiving an active request from the user, prompt information is sent to the user, to explicitly prompt the user that the operation requested to be performed will require access to and use of the user's personal information. Thus, the user can independently choose, according to the prompt information, whether to provide the personal information to software or hardware such as an electronic device, an application, a server, or a storage medium that performs the operations of the technical solutions of the present disclosure. It can be understood that the above process of notifying and acquiring user authorization is only illustrative, and does not limit the implementations of the present disclosure. Other manners that meet relevant laws and regulations can also be applied to the implementations of the present disclosure.

It can be understood that the data involved in the technical solutions (including but not limited to the data itself, and the acquisition or use of the data) should comply with the requirements of corresponding laws and regulations and related provisions.

The embodiments of the present disclosure will be described in more detail below with reference to the drawings. Although some embodiments of the present disclosure are shown in the drawings, it should be understood that the present disclosure can be implemented in various forms and should not be interpreted as limited to the embodiments set forth herein. Rather, these embodiments are provided for a more thorough and complete understanding of the present disclosure. It should be understood that the drawings and embodiments of the present disclosure are only for exemplary purposes, and are not intended to limit the protection scope of the present disclosure.

In the description of the embodiments of the present disclosure, the term "include/include" and similar terms should be understood as open-ended inclusion, that is, "include/include but not limited to". The term "based on" should be understood as "at least partially based on". The term "an embodiment" or "the embodiment" should be understood as "at least one embodiment". The terms "first", "second", and the like may refer to different or the same objects, unless explicitly stated. Other explicit and implicit definitions may also be included below.

In some embodiments of the present disclosure, a chapter-level text translation task from Chinese to English will be described as an example. However, texts in other languages can also be used in combination with the embodiments of the present disclosure. In addition, all specific values herein are examples, which are only for the purpose of helping understanding, and are not intended to limit the scope.

It is found in research that due to different grammars and syntaxes of different languages, some pronouns omitted in a source language need to be supplemented after translation, or a pronoun needs to be explicit as an entity word indicated by the pronoun, which is a difficult problem.

As discussed above, when translating a chapter, a traditional processing method is to translate the chapter by splitting the chapter into individual sentences. Then, the individual translated sentences are spliced together to form a chapter. Therefore, even if the translation of each sentence is not wrong, the same words may result in different translations in different sentences. Particularly in application scenarios such as document translation, novel translation, and video translation, to accurately translate the original text information, contextual semantic relationships (contextual consistency issues) are often considered. At the same time, due to different grammars and syntaxes of different languages, some pronouns omitted in the source language need to be supplemented after translation (an reference issue), or a pronoun needs to be explicit as an entity word indicated by the pronoun (an explicitness issue). The above three issues may be referred to as chapter phenomena, which are issues that need to be solved at present.

To solve the above issues, embodiments of the present disclosure provide a solution for text translation. The solution may use an existing monolingual corpus to determine a keyword set. The keyword set includes an entity word and a pronoun. The keyword set is used to mask the monolingual corpus, and a chapter-level text translation model is trained. The solution can use a large amount of monolingual data to learn a relationship between an entity word and a pronoun, so that chapter phenomena can be effectively solved, thereby improving accuracy of the text translation model.

In the following description, some embodiments will be discussed with reference to text translation processes of a Chinese chapter and an English chapter. It can be understood that a chapter generally refers to one or more paragraphs, or even a complete article, etc., so the chapter at least refers to two sentences with a contextual relationship. For ease of description, two sentences with a contextual relationship are used herein to represent a chapter. However, it should be understood that this is only for those skilled in the art to better understand the principles and ideas of the embodiments of the present disclosure, and is not intended to limit the scope of the present disclosure in any way.

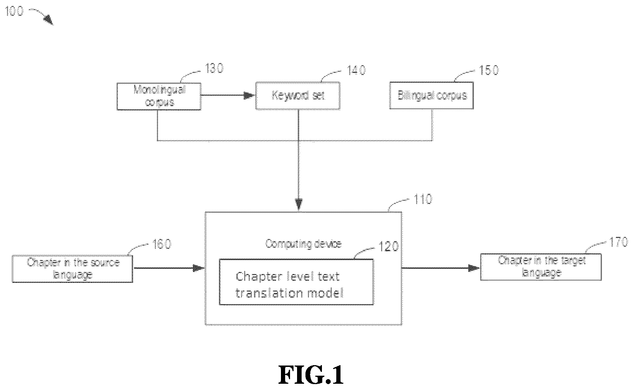

FIG. 1 illustrates a schematic diagram of an example environment 100 in which a method for text translation can be implemented according to some embodiments of the present disclosure. As shown in FIG. 1, the example environment 100 may include a computing device 110, which may be a user terminal, a mobile device, a computer, etc., or may be a computing system, a single server, a distributed server, or a cloud-based server. The computing device 110 may receive a monolingual corpus 130. The monolingual corpus 130 may be understood as a text in a target language without a corresponding source-language text. In fact, a large amount of corpora is monolingual corpora (for example, 97% of the corpora is monolingual corpus), and bilingual corpora with a (source language-target language) correspondence is little (for example, 3% of the corpora).

In the environment 100, a keyword set 140 may also be included. The keyword set 140 may be determined based on the monolingual corpus 130 by extracting entity words, pronouns, keywords of interest, high-frequency keywords, etc. therein. In the environment 100, a bilingual corpus 150 may also be included. As described above, the bilingual corpus 150 may include texts of (source language, target language) two-tuples with a corresponding relationship. The corresponding relationship means that a text in the source language and a text in the target language have the same or similar semantics, and can be translation results of each other.

In the computing device 110, a text translation model 120 at the chapter level may also be included. For example, the text translation model 120 at the chapter level is deployed in the computing device 110. The text translation model 120 may be used to generate a translation result in the target language, that is, a chapter 170 in the target language, based on a chapter 160 in the source language. In some embodiments, the text translation model 120 at the chapter level may be obtained by training based on a machine learning model architecture, by using a loss function associated with the monolingual corpus and the bilingual corpus.

Referring to FIG. 1, according to the embodiments of the present disclosure, the text translation model 120 at the chapter level may obtain more training data by masking the monolingual corpus on the basis of the training data of the bilingual corpus, to train the machine learning model, so that the machine learning model may learn optimized model parameters, and obtain the trained model for an inference stage. It should be understood that the architecture and functions in the example environment 100 are described for exemplary purposes only, without implying any limitation to the scope of the present disclosure. The embodiments of the present disclosure may also be applied to other environments with different structures and/or functions.

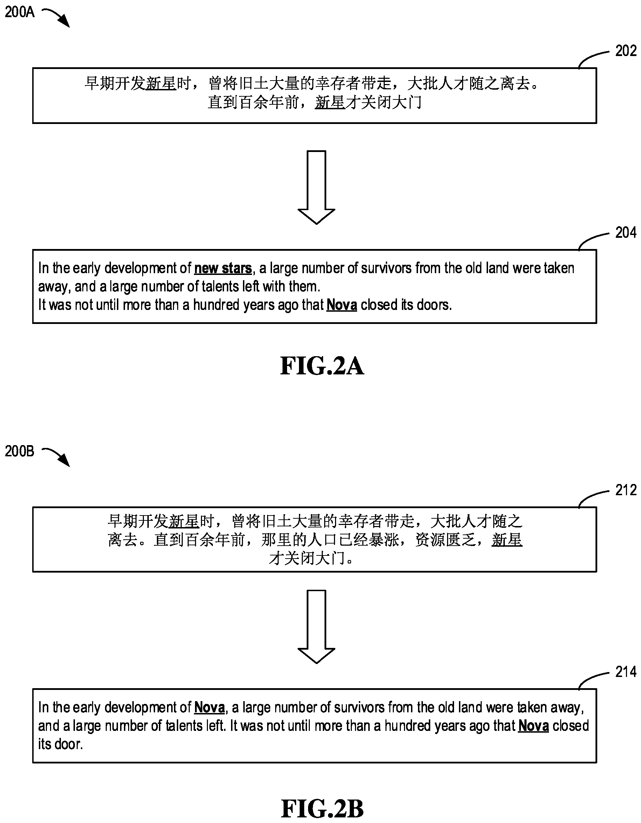

FIG. 2A illustrates a schematic diagram of translation 200A without contextual consistency according to some embodiments of the present disclosure. As shown in the figure, a Chinese chapter 202 is from a novel "The Other Side of Deep Space". Therefore, in this book, the " 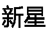 " has a specific name, which is "Nova"(" 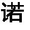 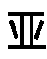 "). According to the English convention, it is best to uniformly translate " 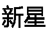 " as "Nova".

However, in an English chapter 204, the " 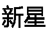 " is translated as two expressions "new star" and "Nova" in two sentences. Therefore, the translation result is not authentic and does not conform to the English convention. Although the translation result is not necessarily wrong, it is not good enough. Therefore, this situation needs to be avoided as much as possible, particularly for two adjacent sentences, translations of the same words preferably have contextual consistency.

FIG. 2B illustrates a schematic diagram of translation 200B with contextual consistency according to some embodiments of the present disclosure. A Chinese chapter 212 is also from the novel "The Other Side of Deep Space", so the " 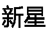 " can also preferably be uniformly translated as "Nova". In the translated English chapter 214, it can be seen that both " 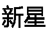 " are translated as "Nova". Therefore, such a translation result has contextual consistency. This is achieved by the text translation model 120 at the chapter level of the present disclosure by learning the correspondence between " 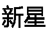 " and "Nova". For example, the text translation model 120 at the chapter level learns the correspondence between " 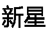 " and "Nova" in other parts of the book. Therefore, even if the word "Nova" does not appear in the chapter 212, the translation result can be that the " 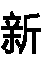 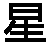 " is translated as "Nova".

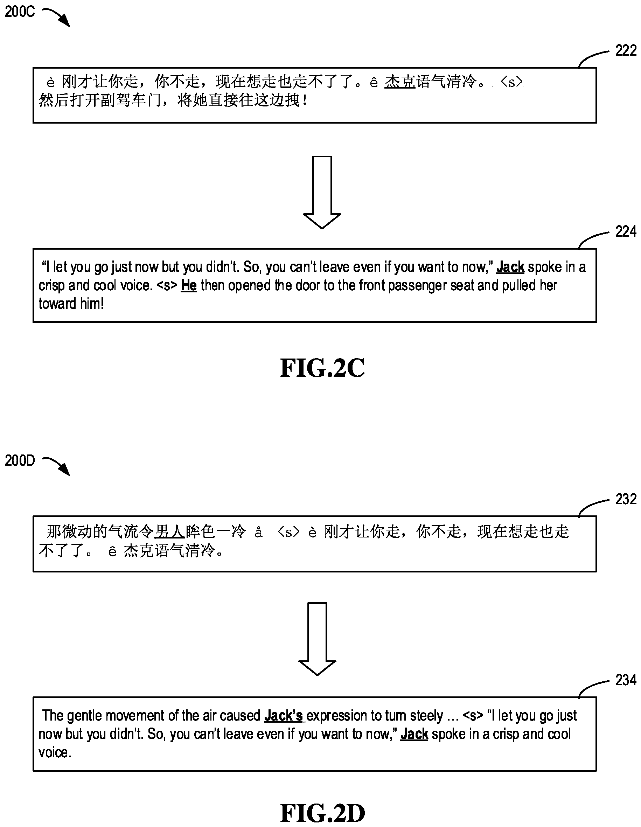

FIG. 2C illustrates a schematic diagram of pronoun supplementation 200C according to some embodiments of the present disclosure. In a Chinese chapter 222, <s> means that the text translation model 120 at the chapter level finds that a pronoun is missing here, which should be supplemented according to English convention. In an English chapter 224, the pronoun "he (" 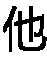 ")" is supplemented after <s>.

This is achieved by the text translation model 120 at the chapter level of the present disclosure by learning the grammar and syntax of English and learning the correspondence between "Jack" and "he". And this supplement result is determined because the object indicated by the pronoun is Jack, and Jack is a male name. This supplemented translation is more in line with the language convention of English and has the effect of pronoun supplementation. It should be noted that <s> is only added for the convenience of describing the supplementation position, and this symbol is not present in an actual chapter.

FIG. 2D illustrates a schematic diagram of pronoun explicit 200D according to some embodiments of the present disclosure. In a Chinese chapter 232, the text translation model 120 at the chapter level finds that the " 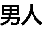 " needs to be explicit as a named entity indicated by it, that is, the person name "Jack", according to the entire context, and <s> means that the text translation model 120 at the chapter level finds that a pronoun is missing here, which should be supplemented according to English convention.

This is achieved by the text translation model 120 at the chapter level of the present disclosure by learning the grammar and syntax of English and learning the correspondence between "Jack" and "man". And this supplement result is determined because the object indicated by the pronoun is Jack, and Jack is a male name. Therefore, in an English chapter 234, the " 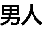 " is translated as "Jack", and the person name "Jack" is supplemented after <s>. This translation result is more in line with the language convention of English, so it has the effect of pronoun explicit.

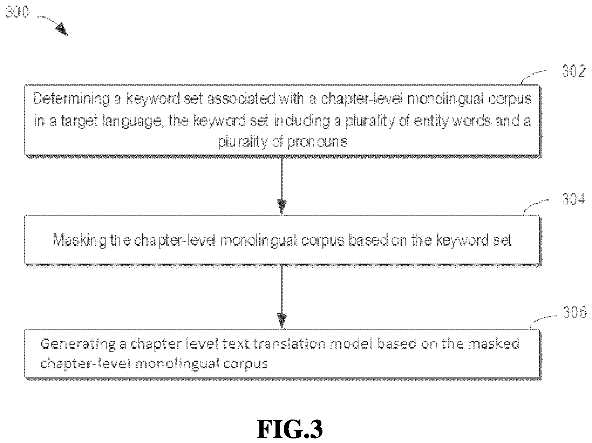

FIG. 3 illustrates a flowchart of a method 300 for text translation according to some embodiments of the present disclosure. The method 300 may be used when training the text translation model 120 at the chapter level. At block 302, a keyword set associated with a chapter-level monolingual corpus in a target language is determined, where the keyword set includes a plurality of entity words and a plurality of pronouns.

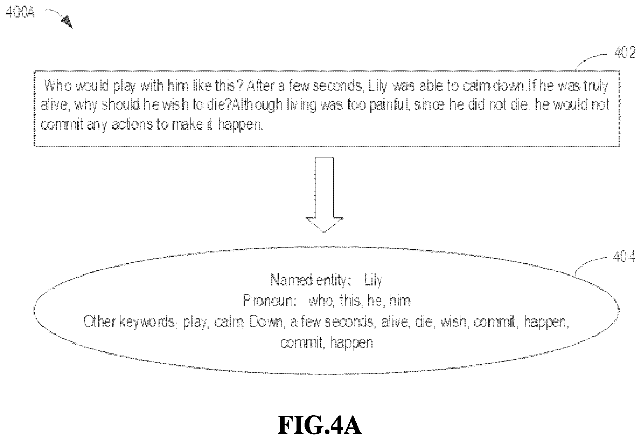

For example, when the target language is English, the keyword set may generally include pronouns (you, I, he, she, it, this, that, who, etc.) and entity words. The types of entity words may include nouns and noun phrases, for example, high-frequency nouns appearing in a chapter. Nouns may be common person names, famous place names, institution names, fixed or conventional words, etc. An example implementation of how to determine the keyword set is described below with reference to FIG. 4A.

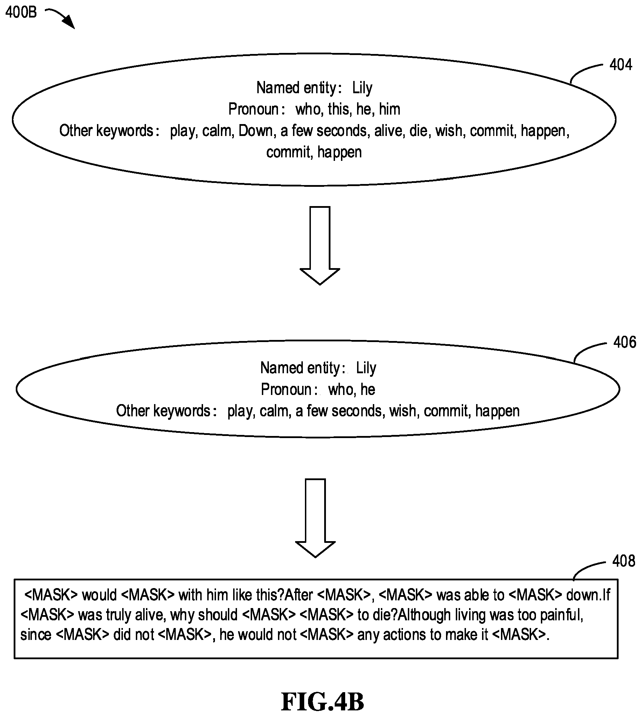

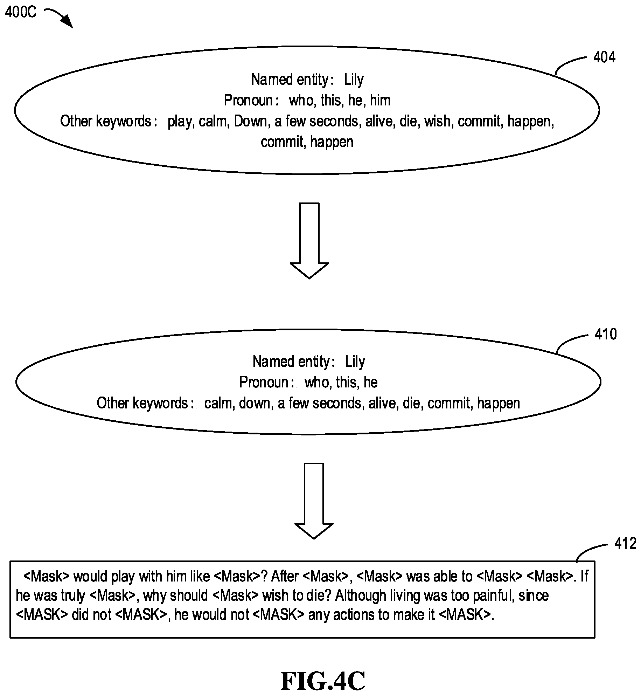

At block 304, masking is performed on the chapter-level monolingual corpus based on the keyword set. For example, if the keyword set includes " 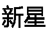 ", the " 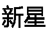 " may be masked. In some embodiments, some subsets may be determined in the keyword set. A certain proportion of words may be masked based on the determined subsets. An example implementation of how to determine the subsets and perform the masking is described below with reference to FIG. 4B and FIG. 4C.

At block 306, a chapter-level text translation model is generated based on the masked chapter-level monolingual corpus. As an example, after the masked chapter-level monolingual corpus is converted into a word embedding (or referred to as a word vector), a corresponding Chinese chapter is generated by the text translation model 120 at the chapter level. The corresponding Chinese chapter is already a text translated at a chapter level, so the chapter phenomena are solved.

According to the method 300 of the embodiments of the present disclosure, the keyword set may be used to mask the monolingual corpus, and the chapter-level text translation model may be trained. Provision of prediction of the masked part is used to learn the correspondence between pronouns and entity words, and parameters of the model are optimized. The translation model trained in this way may use a large amount of monolingual data to learn the relationship between an entity word and a pronoun, so that chapter phenomena can be effectively solved.

FIG. 4A illustrates a schematic diagram of a process 400A of determining a keyword set according to some embodiments of the present disclosure. For an English chapter 402, pronouns therein, such as who (" 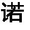 "), this (" 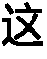 "), he (" 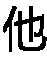 ", nominative case), him (accusative case) may be extracted. For the English chapter 402, person names, such as Lily (" 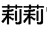 ") may also be extracted. For the English chapter 402, nouns and noun phrases, such as "a few seconds" (" 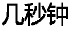 ") may also be extracted.

In some embodiments, other keywords, such as play (" 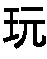 "), calm down (" 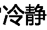 "), etc. may also be extracted for the English chapter 402. These keywords may be determined according to the word frequency in the entire chapter, or may be determined according to a dictionary or a vocabulary. For example, several words or phrases with the highest word frequency may be determined as words in the keyword set 404. In some embodiments, person names, place names, etc. may also be determined as words in the keyword set 404.

The extracted words are determined as words in the keyword set 404. It can be understood that the keyword set 404 is determined for an entire chapter, so the keyword set 404 is not limited to these words shown, but may include more words.

Since the keyword set 404 includes a pronoun and an entity word in the entire chapter, good training data is provided for training the chapter-level text translation model, so that the model may learn the correspondence between pronouns and entity words, so that the chapter phenomena in machine translation can be solved, the translation quality is improved, and the translation result is more in line with the language convention of the target language.

FIG. 4B illustrates a schematic diagram of a process 400B of determining a subset of a keyword set and masking according to some embodiments of the present disclosure. For the keyword set 404, some of the words therein may be selected to form a subset 406. Based on the subset 406, some words in a chapter 402 are masked, to obtain, for example, a masked chapter 408.

In some embodiments, the subset 406 is determined based on an intersection of the chapter 402 and the keyword set 404. In some embodiments, the subset 406 may also be determined in other manners, for example, it is detected whether pronouns and entity words or other keywords in the chapter 402 also appear in the keyword set 404.

In some embodiments, a chapter 402 (a first chapter) in the chapter-level monolingual corpus may be divided into a plurality of sentences. A number of words to be masked in each of the plurality of sentences may be determined based on a predetermined ratio. For example, if the ratio is 20%, if there are 10 words in a sentence, it may be determined that there are 2 masked words. There may be different numbers of masked words for different sentences.

In some embodiments, assuming that there are 5 words that can be masked in a sentence, and 3 masked words are calculated, 3 words may be randomly selected from the 5 words for masking. In some embodiments, the first 3 of the 5 words may be selected for masking. In some embodiments, the last 3 of the 5 words may be selected for masking.

In some embodiments, assuming that there are 3 words that can be masked in a sentence, and 3 masked words are calculated, all the 3 words are masked. In some embodiments, assuming that there are 2 words that can be masked in a sentence, and 3 masked words are calculated, only the 2 words that can be masked are masked.

In some embodiments, if there are more words belonging to the keyword set in a sentence than the number of masked words, another group of words may be selected and another masked chapter may be determined. For example, another group of words with the corresponding number is randomly selected from the subset 406 for masking within a predetermined time since masking the group of words.

FIG. 4C illustrates a schematic diagram of a process 400C of determining another subset of a keyword set and masking according to some embodiments of the present disclosure. In some embodiments, another subset 410 may also be determined, and the subset 410 and the subset 406 may have different words, or may have some same words. For example, after determining the masked chapter 408, another subset 410 is determined, and a masked chapter 412 is determined based on the subset 410.

It can be understood that the determination of the subset 406 and the subset 410 and the corresponding masking process are proposed for the convenience of description. In some embodiments, it is possible to directly select suitable words from the keyword set to mask the chapter without determining the subset. These processes may obtain more monolingual corpus training data, so that the translation model may learn more and more accurate correspondences between pronouns and entity words to solve the chapter phenomena.

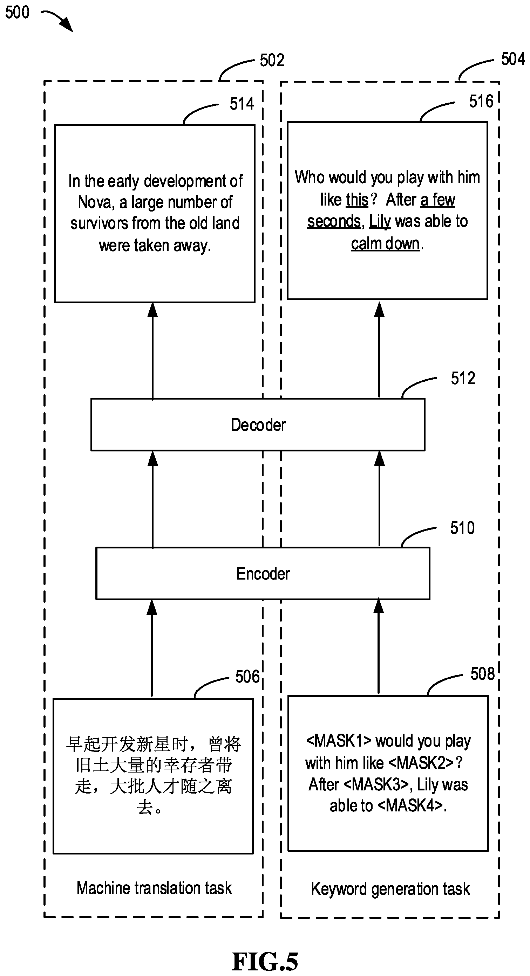

FIG. 5 illustrates a schematic diagram of a process 500 of training a text translation model according to some embodiments of the present disclosure. The process 500 may be divided into a machine translation task 502 and a keyword generation task 504. In the machine translation task 502, a Chinese chapter 506 in a source language generates an English chapter 514 in a target language via an encoder 510 and an encoder 512.

In the keyword generation task 504, a masked chapter 508 in the target language generates a masked English chapter 516 in the target language via the encoder 510 and the encoder 512. The encoder 510 and the encoder 512 are included in the text translation model 120 at the chapter level.

In some embodiments, the keyword generation task 504 determines a probability distribution representing that a masked word is each word in a vocabulary, and determines, based on the probability distribution, the masked word. In some embodiments, the machine translation task 502 and the keyword generation task 504 may be performed in parallel or sequentially. When performing the machine translation task 502 and the keyword generation task 504, the translation model adjusts its own parameters to optimize its own translation result. The chapter-level text translation model trained in this way may learn semantic features required for translation from the source language to the target language, and may also learn the correspondence between pronouns and entity words. Moreover, since the amount of data in the monolingual corpus is much more than that in the bilingual corpus, the monolingual corpus may be more fully utilized to obtain a better translation result, thereby improving the chapter phenomena.

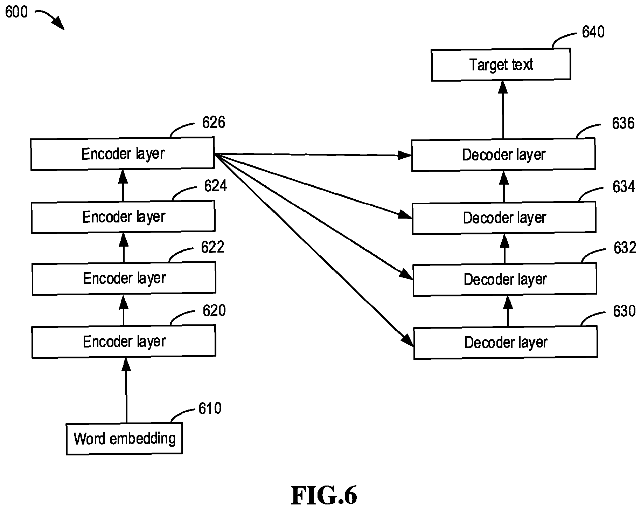

FIG. 6 illustrates a schematic diagram of an example architecture 600 of a text translation model according to some embodiments of the present disclosure. As shown in FIG. 6, an encoder 510 in the text translation model 120 at the chapter level includes a plurality of layers. Only as an example, the encoder 510 has four layers, such as an encoder layer 620, an encoder layer 622, an encoder layer 624, and an encoder layer 626, to fully extract semantic information of a word embedding 610 and encode the semantic information into an information matrix.

In an embodiment, a single encoder layer (e.g., the encoder layer 626) may include two sub-layers, one layer is a multi-head attention layer, which uses an attention mechanism to learn relationships within a source text. The other layer is a feedforward layer, e.g., a fully connected network, which generates and outputs an encoding information matrix through linear transformations and activation functions (e.g., ReLU functions) in multiple layers.

A decoder 512 in the text translation model 120 at the chapter level in the decoding stage may include a plurality of layers, for example, including four decoder layers, such as a decoder layer 630, a decoder layer 632, a decoder layer 634, and a decoder layer 636. When performing the machine translation task 502, each decoder layer may perform decoding based on the encoding information matrix and an output of the previous decoder layer, to predict a probability of a next word. Based on the probability of each word at each position, a combination of words with a largest probability at each position may be selected as an output target text 640. Although FIG. 6 shows four encoder and/or decoder layers, the embodiments of the present disclosure may have fewer or more encoder layers and/or decoder layers.

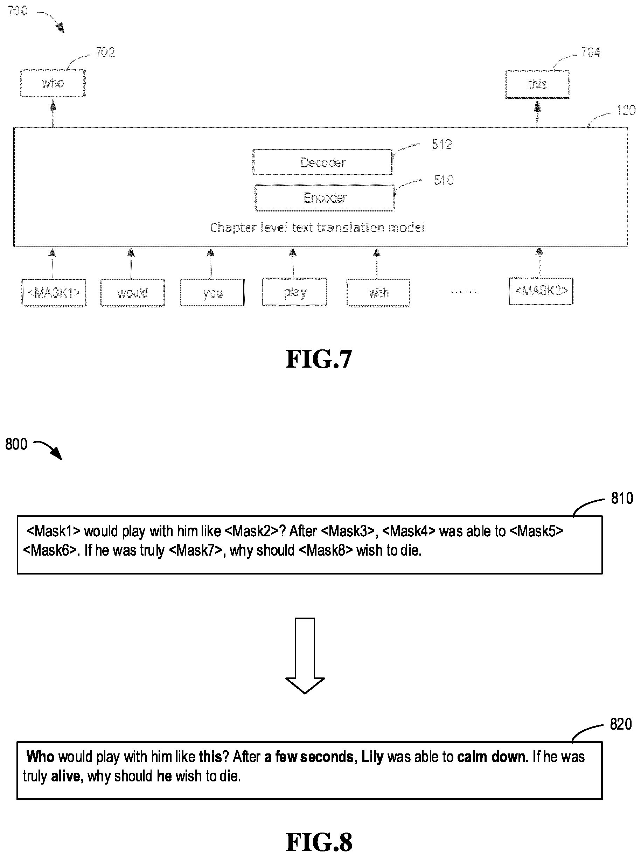

FIG. 7 illustrates a schematic diagram of a process of predicting a masked word according to some embodiments of the present disclosure. As shown in FIG. 7, when performing the keyword generation task 504, masked words are represented as <MASK1> and <MASK2>. The text translation model 120 at the chapter level needs to predict the words represented by <MASK1> and <MASK2>. For example, <MASK1> is predicted as "who", word 702, and <MASK2> is predicted as "this", word 704.

At this time, the text translation model 120 at the chapter level is trained based on the two training tasks, so that better translation results such as pronoun explicit and contextual consistency can be achieved. At the same time, since the structures of the text translation model 120 at the chapter level are not changed in the two tasks, but the training data is different, stronger scalability and transferability are provided, and it is more convenient to expand and transfer to translations of other languages.

FIG. 8 illustrates a schematic diagram of a training effect 800 with a monolingual corpus according to some embodiments of the present disclosure. It can be seen that the prediction effect of the masked English chapter 810 is good, and in the predicted English chapter 820, the words at each masked position are accurately predicted. In this way, the model may master the correspondence between pronouns and entity words. In combination with the machine translation task, the chapter phenomena in the translated text in the target language may be significantly improved.

In some embodiments, a target chapter in the source language may be obtained, for example, a Chinese chapter that is not training data and needs to be translated. The target chapter is translated into a corresponding chapter in the target language, for example, translated into an English chapter, using the text translation model 120 at the chapter level.

In some embodiments, the text translation model 120 at the chapter level may determine a missing pronoun in the Chinese chapter, and supplement the missing pronoun at a corresponding position in the English chapter. For example, in the chapter 224 in FIG. 2C, <s> is supplemented as he. In some embodiments, the text translation model 120 at the chapter level may determine a pronoun in the Chinese chapter, and explicit a noun or an object indicated by the determined pronoun at a corresponding position in the English chapter. For example, in the chapter 234 in FIG. 2D, man is explicit as Jack.

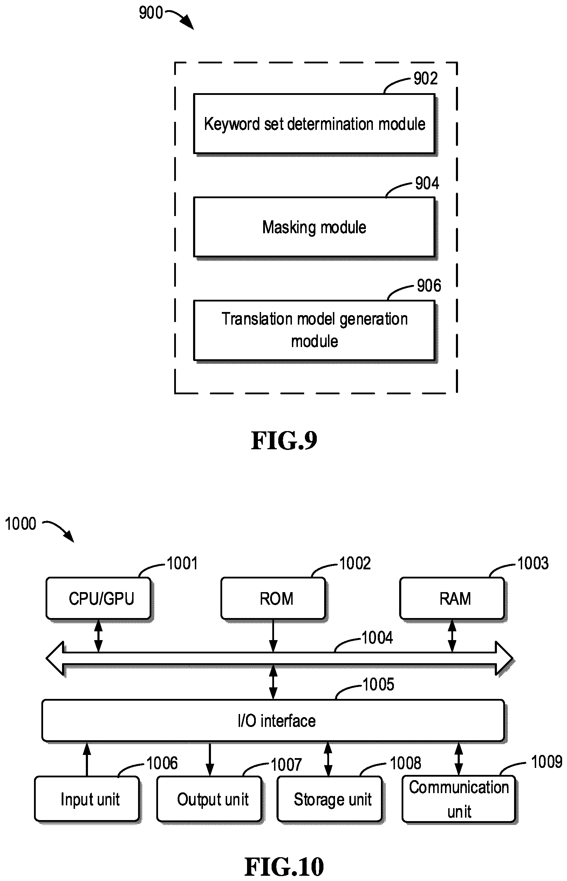

FIG. 9 illustrates a block diagram of an apparatus 900 for text translation according to some embodiments of the present disclosure. As shown in FIG. 9, the apparatus 900 includes a keyword set determination module 902 configured to determine a keyword set associated with a chapter-level monolingual corpus in a target language, the keyword set including a plurality of entity words and a plurality of pronouns. The apparatus 900 further includes a masking module 904 configured to mask the chapter-level monolingual corpus based on the keyword set. The apparatus 900 further includes a translation model generation module 906 configured to generate a chapter-level text translation model based on the masked chapter-level monolingual corpus. The apparatus 900 may also include other modules to implement the steps of the method 300 according to the embodiments of the present disclosure. For the sake of brevity, details are not repeated here.

It can be understood that through the apparatus 900 of the present disclosure, at least one of the many advantages that can be achieved by the methods or processes described above can be realized. For example, a large amount of monolingual data is used to learn the relationship between an entity word and a pronoun, so that chapter phenomena can be effectively solved. For another example, stronger scalability and transferability can be achieved, and it is more convenient to expand and transfer to translations of other languages.

FIG. 10 illustrates a block diagram of an electronic device 1000 according to some embodiments of the present disclosure. The device 1000 may be the device or apparatus described in the embodiments of the present disclosure. As shown in FIG. 10, the device 1000 includes a central processing unit (CPU) and/or a graphics processing unit (GPU) 1001, which may perform various appropriate actions and processes according to computer program instructions stored in a read-only memory (ROM) 1002 or computer program instructions loaded from a storage unit 1008 into a random-access memory (RAM) 1003. Various programs and data required for the operation of the device 1000 may also be stored in the RAM 1003. The CPU/GPU 1001, ROM 1002, and RAM 1003 are connected to each other through a bus 1004. An input/output (I/O) interface 1005 is also connected to the bus 1004. Although not shown in FIG. 10, the device 1000 may also include a coprocessor.

A plurality of components in the device 1000 are connected to the I/O interface 1005, including: an input unit 1006, such as a keyboard, a mouse, etc.; an output unit 1007, such as various types of displays, Speakers, etc.; a storage unit 1008, such as a magnetic disk, an optical disk, etc.; and a communication unit 1009, such as a network card, a modem, a wireless communication transceiver, etc. The communication unit 1009 allows the device 1000 to exchange information/data with other devices through a computer network such as the Internet and/or various telecommunication networks.

The various methods or processes described above may be performed by the CPU/GPU 1001. For example, in some embodiments, the method may be implemented as a computer software program, which is tangibly included in a machine-readable medium, such as the storage unit 1008. In some embodiments, part or all of the computer program may be loaded and/or installed on the device 1000 via the ROM 1002 and/or the communication unit 1009. When the computer program is loaded into the RAM 1003 and executed by the CPU/GPU 1001, one or more steps or actions in the method or process described above may be performed.

In some embodiments, the methods and processes described above may be implemented as a computer program product. The computer program product may include a computer-readable storage medium having computer-readable program instructions for performing various aspects of the present disclosure.

The computer-readable storage medium may be a tangible device that can hold and store instructions for use by an instruction execution device. The computer-readable storage medium may be, for example, but not limited to, an electrical storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random-access memory (RAM), a read-only memory (ROM), an erasable programmable read-only memory (EPROM or flash memory), a static random-access memory (SRAM), a portable compact disk read-only memory (CD-ROM), a digital versatile disk (DVD), a memory stick, a floppy disk, a mechanical encoding device, such as a punched card having instructions stored thereon or a raised structure in a groove, and any suitable combination thereof. The computer-readable storage medium used herein is not interpreted as a transient signal per se, such as a radio wave or other freely propagating electromagnetic waves, an electromagnetic wave propagated through a waveguide or other transmission medium (e.g., an optical pulse through an optical fiber cable), or an electrical signal transmitted through a wire.

The computer-readable program instructions described herein may be downloaded from a computer-readable storage medium to various computing/processing devices, or downloaded to an external computer or an external storage device via a network, such as the Internet, a local area network, a wide area network, and/or a wireless network. The network may include a copper transmission cable, an optical fiber transmission, a wireless transmission, a router, a firewall, a switch, a gateway computer, and/or an edge server. A network adapter card or a network interface in each computing/processing device receives computer-readable program instructions from the network and forwards the computer-readable program instructions for storage in a computer-readable storage medium in the respective computing/processing device.

The computer program instructions for performing the operations of the present disclosure may be assembly instructions, instruction set architecture (ISA) instructions, machine instructions, machine-related instructions, microcode, firmware instructions, state setting data, or source code or target code written in any combination of one or more programming languages, including object-oriented programming languages and conventional procedural programming languages. The computer-readable program instructions may be executed entirely on a user's computer, partly on the user's computer, as a stand-alone software package, partly on the user's computer and partly on a remote computer, or entirely on the remote computer or server. In the case of involving a remote computer, the remote computer may be connected to a user's computer through any kind of network, including a local area network (LAN) or a wide area network (WAN), or may be connected to an external computer (for example, via the Internet through an Internet service provider). In some embodiments, an electronic circuit, such as a programmable logic circuit, a field programmable gate array (FPGA), or a programmable logic array (PLA), may be customized using state information of the computer-readable program instructions, and the electronic circuit may execute the computer-readable program instructions, thereby implementing various aspects of the present disclosure.

These computer-readable program instructions may be provided to a processing unit of a general-purpose computer, a special-purpose computer, or other programmable data processing apparatus, to produce a machine that, when the instructions are executed by the processing unit of the computer or other programmable data processing apparatus, produces an apparatus for implementing the functions/acts specified in one or more blocks in a flowchart and/or block diagram. These computer-readable program instructions may also be stored in a computer-readable storage medium, and these instructions cause a computer, a programmable data processing apparatus, and/or other devices to work in a specific manner, so that the computer-readable medium having instructions stored thereon includes an article of manufacture, which includes instructions for implementing various aspects of the functions/acts specified in one or more blocks in a flowchart and/or block diagram.

The computer-readable program instructions may also be loaded onto a computer, other programmable data processing apparatus, or other device, causing a series of operational steps to be performed on the computer, other programmable data processing apparatus, or other device to produce a computer-implemented process, such that the instructions which execute on the computer, other programmable data processing apparatus, or other device implement the functions/acts specified in one or more of the blocks in the flowchart and/or block diagram.

The flowcharts and block diagrams in the drawings show possible architectures, functions and operations of the device, method and computer program product according to multiple embodiments of the present disclosure. In this regard, each block in the flowcharts or block diagrams may represent a module, a program segment, or a portion of instructions, including one or more executable instructions for implementing specified logical functions. In some alternative implementations, the functions noted in the blocks may also occur out of the order noted in the drawings. For example, two successive blocks may, in fact, be performed substantially concurrently, or the blocks may sometimes be performed in a reverse order, depending upon the functionality involved. It is also noted that each block of the block diagrams and/or flowcharts, and combinations of blocks in the block diagrams and/or flowcharts, may be implemented by a dedicated hardware-based system which performs the specified functions or acts, or may also be implemented by a combination of dedicated hardware and computer instructions.

The embodiments of the present disclosure have been described above, and the above description is exemplary, not exhaustive, and is not limited to the disclosed embodiments. Many modifications and changes are obvious to ordinary technical personnel in this technical field without departing from the scope and spirit of the embodiments described. The selection of terms used herein is intended to best explain the principles, practical applications, or technical improvements to technique in the marketplace of the embodiments, or to enable other ordinary technical personnel in this technical field to understand the embodiments disclosed herein.

Some example implementations of the present disclosure are listed below.

Example 1. A method for text translation, including:
determining a keyword set associated with a chapter-level monolingual corpus in a target language, the keyword set including a plurality of entity words and a plurality of pronouns;
masking the chapter-level monolingual corpus based on the keyword set; and
generating a chapter-level text translation model based on the masked chapter-level monolingual corpus.

Example 2. The method according to Example 1, where determining the keyword set associated with the chapter-level monolingual corpus in the target language includes:
extracting the plurality of pronouns from the chapter-level monolingual corpus;
extracting the plurality of entity words from the chapter-level monolingual corpus, a type of the plurality of entity words including one or more of: a person name, a place name, an institution name, or a noun phrase; and
generating the keyword set based on the plurality of pronouns and the plurality of entity words.

Example 3. The method according to any one of Examples 1 to 2, where determining the keyword set associated with the chapter-level monolingual corpus in the target language includes:
determining a word frequency corresponding to a plurality of words in the chapter-level monolingual corpus, the plurality of words including an entity word and a pronoun; and
generating the keyword set based on the word frequency corresponding to the plurality of words.

Example 4. The method according to any one of Examples 1 to 3, where masking the chapter-level monolingual corpus based on the keyword set includes:
dividing a first chapter in the chapter-level monolingual corpus into a plurality of sentences;
determining, based on a predetermined ratio, a number of words to be masked in each of the plurality of sentences; and
masking a corresponding number of words in the each of the plurality of sentences based on the keyword set.

Example 5. The method according to any one of Examples 1 to 4, where masking the corresponding number of words in the each of the plurality of sentences based on the keyword set includes:
determining, based on the keyword set, a subset in a first sentence in the plurality of sentences; and
randomly selecting, from the subset, a group of words with the corresponding number for masking.

Example 6. The method according to any one of Examples 1 to 5, where masking the corresponding number of words in the each of the plurality of sentences based on the keyword set further includes:
randomly selecting, from the subset, another group of words with the corresponding number for masking at a predetermined time after masking the group of words.

Example 7. The method according to any one of Examples 1 to 6, where generating the chapter-level text translation model based on the masked chapter-level monolingual corpus includes:
determining a probability distribution representing that a masked word is each word in a vocabulary; and
determining, based on the probability distribution, the masked word.

Example 8. The method according to any one of Examples 1 to 7, further including:
obtaining a labeled chapter-level bilingual corpus, where the bilingual corpus includes a chapter in a source language and a corresponding chapter in the target language; and
training the chapter-level text translation model based on the labeled chapter-level bilingual corpus.

Example 9. The method according to any one of Examples 1 to 8, further including:
obtaining a target chapter in the source language; and
translating, using the chapter-level text translation model, the target chapter into a corresponding chapter in the target language.

Example 10. The method according to any one of Examples 1 to 9, where translating the target chapter into the corresponding chapter in the target language includes:
determining a missing pronoun in the chapter in the source language; and
supplementing the missing pronoun at a corresponding position in the chapter in the target language.

Example 11. The method according to any one of Examples 1 to 10, where translating the target chapter into the corresponding chapter in the target language further includes:
determining a pronoun in the target chapter in the source language; and
explicit a noun or an object indicated by the determined pronoun at a corresponding position in the chapter in the target language.

Example 12. An apparatus for text translation, including:
a keyword set determination module configured to determine a keyword set associated with a chapter-level monolingual corpus in a target language, the keyword set including a plurality of entity words and a plurality of pronouns;
a masking module configured to mask the chapter-level monolingual corpus based on the keyword set; and
a translation model generation module configured to generate a chapter-level text translation model based on the masked chapter-level monolingual corpus.

Example 13. The apparatus according to Example 12, where the keyword set determination module includes:
a pronoun extraction module configured to extract the plurality of pronouns from the chapter-level monolingual corpus;
an entity word extraction module configured to extract the plurality of entity words from the chapter-level monolingual corpus, a type of the plurality of entity words including one or more of: a person name, a place name, an institution name, or a noun phrase; and
a first keyword set generation module configured to generate the keyword set based on the plurality of pronouns and the plurality of entity words.

Example 14. The apparatus according to any one of Examples 12 to 13, where the keyword set determination module includes:
a word frequency determination module configured to determine a word frequency corresponding to a plurality of words in the chapter-level monolingual corpus, the plurality of words including an entity word and a pronoun; and
a second keyword set generation module configured to generate the keyword set based on the word frequency corresponding to the plurality of words.

Example 15. The apparatus according to any one of Examples 12 to 14, where the masking module includes:
a sentence division module configured to divide a first chapter in the chapter-level monolingual corpus into a plurality of sentences;
a number-of-masked-words determination module configured to determine, based on a predetermined ratio, a number of words to be masked in each of the plurality of sentences; and
a second masking module configured to mask a corresponding number of words in the each of the plurality of sentences based on the keyword set.

Example 16. The apparatus according to any one of Examples 12 to 15, where the second masking module includes:
a first subset determination module configured to determine, based on the keyword set, a subset in a first sentence in the plurality of sentences; and
a third masking module configured to randomly select, from the subset, a group of words with the corresponding number for masking.

Example 17. The apparatus according to any one of Examples 12 to 16, where the second masking module further includes:
a fourth masking module configured to randomly select, from the subset, another group of words with the corresponding number for masking at a predetermined time after masking the group of words.

Example 18. The apparatus according to any one of Examples 12 to 17, where the translation model generation module includes:
a probability distribution determination module configured to determine a probability distribution representing that a masked word is each word in a vocabulary; and
a masked word prediction module configured to determine, based on the probability distribution, the masked word.

Example 19. The apparatus according to any one of Examples 12 to 18, further including:
a bilingual corpus obtaining module configured to obtain a labeled chapter-level bilingual corpus, where the bilingual corpus includes a chapter in a source language and a corresponding chapter in the target language; and
a training module configured to train the chapter-level text translation model based on the labeled chapter-level bilingual corpus.

Example 20. The apparatus according to any one of Examples 12 to 19, further including:
a target chapter module configured to obtain a target chapter in the source language; and
a second translation module configured to translate, using the chapter-level text translation model, the target chapter into a corresponding chapter in the target language.

Example 21. The apparatus according to any one of Examples 12 to 20, where the second translation module includes:
a missing pronoun determination module configured to determine a missing pronoun in the target chapter in the source language; and
a missing pronoun supplementation module configured to supplement the missing pronoun at a corresponding position in the chapter in the target language.

Example 22. The apparatus according to any one of Examples 12 to 21, where the second translation module further includes:
a pronoun determination module configured to determine a pronoun in the target chapter in the source language; and
a pronoun explicit module configured to explicit a noun or an object indicated by the determined pronoun at a corresponding position in the chapter in the target language.

Example 23. An electronic device, including:
a processor; and
a memory coupled to the processor, the memory having instructions stored thereon, the instructions, when executed by the processor, causing the electronic device to perform actions, the actions including:
   determining a keyword set associated with a chapter-level monolingual corpus in a target language, the keyword set including a plurality of entity words and a plurality of pronouns;
   masking the chapter-level monolingual corpus based on the keyword set; and
   generating a chapter-level text translation model based on the masked chapter-level monolingual corpus.

Example 24. The electronic device according to Example 23, where determining the keyword set associated with the chapter-level monolingual corpus in the target language includes:
extracting the plurality of pronouns from the chapter-level monolingual corpus;
extracting the plurality of entity words from the chapter-level monolingual corpus, where a type of the plurality of entity words includes one or more of: a person name, a place name, an institution name, or a noun phrase; and
generating the keyword set based on the plurality of pronouns and the plurality of entity words.

Example 25. The electronic device according to any one of Examples 23 to 24, where determining the keyword set associated with the chapter-level monolingual corpus in the target language includes:
determining a word frequency corresponding to a plurality of words in the chapter-level monolingual corpus, the plurality of words including an entity word and a pronoun; and
generating the keyword set based on the word frequency corresponding to the plurality of words.

Example 26. The electronic device according to any one of Examples 23 to 25, where masking the chapter-level monolingual corpus based on the keyword set includes:
dividing a first chapter in the chapter-level monolingual corpus into a plurality of sentences;
determining, based on a predetermined ratio, a number of words to be masked in each of the plurality of sentences; and
masking a corresponding number of words in the each of the plurality of sentences based on the keyword set.

Example 27. The electronic device according to any one of Examples 23 to 26, where masking the corresponding number of words in the each of the plurality of sentences based on the keyword set includes:
determining, based on the keyword set, a subset in a first sentence in the plurality of sentences; and
randomly selecting, from the subset, a group of words with the corresponding number for masking.

Example 28. The electronic device according to any one of Examples 23 to 27, where masking the corresponding number of words in the each of the plurality of sentences based on the keyword set further includes:
randomly selecting, from the subset, another group of words with the corresponding number for masking at a predetermined time after masking the group of words.

Example 29. The electronic device according to any one of Examples 23 to 28, where generating the chapter-level text translation model based on the masked chapter-level monolingual corpus includes:
determining a probability distribution representing that a masked word is each word in a vocabulary; and
determining, based on the probability distribution, the masked word.

Example 30. The electronic device according to any one of Examples 23-29, where the acts further include:
obtaining a labeled chapter-level bilingual corpus, where the bilingual corpus includes a chapter in a source language and a corresponding chapter in the target language; and
training the chapter-level text translation model based on the labeled chapter-level bilingual corpus.

Example 31. The electronic device according to any one of Examples 23-30, where the acts further include:
obtaining a target chapter in the source language; and
translating, using the chapter-level text translation model, the target chapter into a corresponding chapter in the target language.

Example 32. The electronic device according to any one of Examples 23-31, where translating the target chapter into the corresponding chapter in the target language includes:
determining a missing pronoun in the target chapter in the source language; and
supplementing the missing pronoun at a corresponding position in the chapter in the target language.

Example 33. The electronic device according to any one of Examples 23-32, where translating the target chapter into the corresponding chapter in the target language further includes:
determining a pronoun in the target chapter in the source language; and
explicit a noun or an object indicated by the determined pronoun at a corresponding position in the chapter in the target language.

Example 34. A computer-readable storage medium having one or more computer instructions stored thereon, where the one or more computer instructions are executed by a processor to implement the method according to any one of Examples 1 to 11.

Example 35. A computer program product being tangibly stored on a computer-readable medium and including computer-executable instructions, the computer-executable instructions, when executed by a device, causing the device to perform the method according to any one of Examples 1 to 11.

Although the present disclosure has been described in language specific to structural features and/or method logic actions, it should be understood that the subject matter defined in the appended claims is not necessarily limited to the specific features or actions described above. Rather, the specific features and actions described above are merely examples of implementing the claims.

## Claims

1. A method for text translation, comprising:
determining a keyword set associated with a chapter-level monolingual corpus in a target language, the keyword set comprising a plurality of entity words and a plurality of pronouns;
masking the chapter-level monolingual corpus based on the keyword set; and
generating a chapter-level text translation model based on the masked chapter-level monolingual corpus.

2. The method of claim 1, wherein determining the keyword set associated with the chapter-level monolingual corpus in the target language comprises:
extracting the plurality of pronouns from the chapter-level monolingual corpus;
extracting the plurality of entity words from the chapter-level monolingual corpus, wherein a type of the plurality of entity words comprises one or more of: a person name, a place name, an institution name, or a noun phrase; and
generating the keyword set based on the plurality of pronouns and the plurality of entity words.

3. The method of claim 1, wherein determining the keyword set associated with the chapter-level monolingual corpus in the target language comprises:
determining a word frequency corresponding to a plurality of words in the chapter-level monolingual corpus, wherein the plurality of words comprise an entity word and a pronoun; and
generating the keyword set based on the word frequency corresponding to the plurality of words.

4. The method of claim 1, wherein masking the chapter-level monolingual corpus based on the keyword set comprises:
dividing a first chapter in the chapter-level monolingual corpus into a plurality of sentences;
determining, based on a predetermined ratio, a number of words to be masked in each of the plurality of sentences; and
masking a corresponding number of words in the each of the plurality of sentences based on the keyword set.

5. The method of claim 4, wherein masking the corresponding number of words in the each of the plurality of sentences based on the keyword set comprises:
determining, based on the keyword set, a subset in a first sentence in the plurality of sentences; and
randomly selecting, from the subset, a group of words with the corresponding number for masking.

6. The method of claim 5, wherein masking the corresponding number of words in the each of the plurality of sentences based on the keyword set further comprises:
randomly selecting, from the subset, another group of words with the corresponding number for masking at a predetermined time after masking the group of words.

7. The method of any one of claims 1 to 6, wherein generating the chapter-level text translation model based on the masked chapter-level monolingual corpus comprises:
determining a probability distribution representing that a masked word is each word in a vocabulary; and
determining, based on the probability distribution, the masked word.

8. The method of any one of claims 1 to 6, further comprising:
obtaining a labeled chapter-level bilingual corpus, wherein the bilingual corpus comprises a chapter in a source language and a corresponding chapter in the target language; and
training the chapter-level text translation model based on the labeled chapter-level bilingual corpus.

9. The method of claim 8, further comprising:
obtaining a target chapter in the source language; and
translating, using the chapter-level text translation model, the target chapter into a corresponding chapter in the target language.

10. The method of claim 9, wherein translating the target chapter into the corresponding chapter in the target language comprises:
determining a missing pronoun in the chapter in the source language; and
supplementing the missing pronoun at a corresponding position in the chapter in the target language.

11. The method of claim 9, wherein translating the target chapter into the corresponding chapter in the target language further comprises:
determining a pronoun in the chapter in the source language; and
explicit a noun or an object indicated by the determined pronoun at a corresponding position in the chapter in the target language.

12. An apparatus for text translation, comprising:
a keyword set determination module, configured to determine a keyword set associated with a chapter-level monolingual corpus in a target language, the keyword set comprising a plurality of entity words and a plurality of pronouns;
a masking module, configured to mask the chapter-level monolingual corpus based on the keyword set; and
a translation model generation module, configured to generate a chapter-level text translation model based on the masked chapter-level monolingual corpus.

13. An electronic device, comprising:
a processor; and
a memory coupled to the processor, the memory having instructions stored thereon, the instructions, when executed by the processor, causing the electronic device to perform the method of any of claims 1 to 11.

14. A computer-readable storage medium having computer-executable instructions stored thereon, wherein the computer-executable instructions are executed by a processor to implement the method of any of claims 1 to 11.
